# EUROPEAN PATENT SPECIFICATION

(11) **EP 2 675 612 B1**
(45) Date of publication and mention of the grant of the patent: **06.04.2016**
(21) Application number: 12720997.1
(22) Date of filing: 15.02.2012
(51) Int. Cl.: B29C 70/54, B29C 70/38

(54) **MECHANISM FOR AUTOMATICALLY CUTTING AND PLACEMENT OF RESIN IMPREGNATED FIBERS**
MECHANISMUS ZUM AUTOMATISCHEN SCHNEIDEN UND PLATZIEREN HARZIMPRÄGNIERTER FASERN
MECANISME DE DECOUPE ET DE MISE EN PLACE AUTOMATIQUES DE FIBRES IMPREGNEES DE RESINE

(30) Priority: 15.02.2011 MK 511511
(43) Date of publication of application: 25.12.2013
(73) Proprietor: Tekon D.O.O., 37500 Prilep (MK)
(72) Inventor: SAMKOSKI, Blagoja, 7500 Prilep (MK); SOKOLOSKI, Zlatko, 7500 Prilep (MK); MANESKI, Gari, 7500 Prilep (MK)
(74) Representative: Ilievski, Bogoljub
(86) International application number: PCT/MK2012/000002
(87) International publication number: WO 2012/112017

(56) References cited:
- EP-A1- 0 154 321
- FR-A1- 2 692 520
- US-A1- 2008 302 483
- EVANS DON O ED - MIRACLE & S L DONALDSON D B: "ASM Handbook, Composites, Fiber Placement", 1 December 2001 (2001-12-01), ASM HANDBOOK - COMPOSITES, ASM INTERNATIONAL, MATERIALS PARK, OHIO ,USA, PAGE(S) 477 - 479, XP002565730, ISBN: 978-0-87170-703-1 figures 1,2 page 477

## Description

### Technical field to which the invention relates

The invention relates to the field of performing operations. According to International Patent Classification (IPC) the invention can be classified in the section of processing of plastic materials or processing materials in a plastic condition. The invention belongs to the group of forming with a winding that can be classified with the classification symbol **B29C 53/00.**

The invention can also be classified in the same section or in the subgroup of reshaping with manual placement or laying of fiber. The label in this case would be **B29C 70/30.**

### Technical problem which is solved by the invention

In the current state of the art winding and placing the fibers on the surface of the part which has to be winded with "Filament Winding" and fibers cutting are performed automatically.

### State of the art

Filament winding means production of parts consisting of high volume parts and controlled orientation of the fibers. Typically, the fibers are impregnated in resin and then bet with light or heavy reagents. Impregnated fibers then are wound around mandrel literally, in a controlled pattern in order to form the shape of the part. After winding, the resin is reacted, usually using heat. Molds can be removed or can be left as an integral component of the part. This process is primarily used for hollow, mainly circular or oval components, such as pipes and tanks. Pressure vessels, pipes and drive shafts are usually manufactured using filament winding. It is combined with other fiber application methods such manual placement and knitting. Tamponing is through fiber tension and resin content is mainly (Rosato, DV) standard. Fibers can be impregnated with resin before winding (wet winding), pre impregnated (dry winding) or post-impregnated. Wet winding has advantages of low cost of materials with a long shelf-life and low viscosity. Pre-impregnated systems produce parts with more consistent resin content and can often be faster wound.

Document FR 2 692 520 discloses a mechanism for automatically cutting and placement of resin impregnated fibers, which differs from the present application in that a cylinder allows linear motion of the fiber hold bet to pull it out.

### Description of the technical solution of the problem

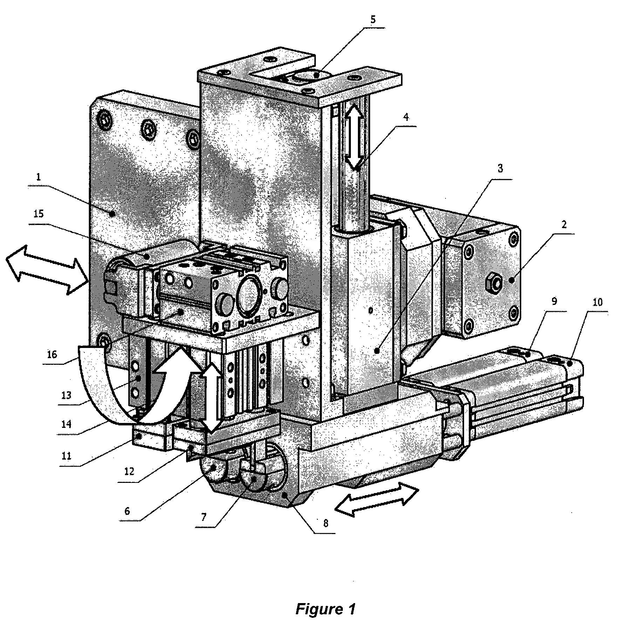

For better description of the essence of the technical solution to this invention, we will use figure 1 which shows the mechanism for automatically cutting and placement of resin impregnated fibers which comprises the following components:
1. Carrier mechanism
2. Rotational pneumatic cylinder
3. Bearing for linear motion
4. Guide
5. Pneumatic cylinder for linear motion
6. Fiber hold bed
7. Fiber cut bed
8. Housing of fiber hold bed and fiber cut bed
9. Pneumatic cylinder to move the fiber hold bed
10. Pneumatic cylinder to move the fiber cut bed
11. Fiber holder
12. Knife
13. Pneumatic cylinder that move fiber holder
14. Pneumatic cylinder that move the knife
15. Pressure roller
16. Pneumatic cylinder that move the roller
The above mentioned components of the mechanism have the following function

Carrier (1) is used for mechanism to be set to the carriage which can move longitudinally and transversely relative to the axis of the wound part. Rotational pneumatic cylinder (2) allows rotation of the components mounted on guide (4) and the said components and also the pneumatic cylinder (5) are rotated with the rotational cylinder. Pneumatic cylinder (9) allows linear motion of the fiber hold bed (6) and pull it out until pneumatic cylinder (10) allows linear motion of the fiber cut bed (7) and pull it out. The opening and closing of fiber holder is allowed by pneumatic cylinder (13), while opening and closing of the knife is allowed by pneumatic cylinder (14). Movement of pressure roller (15) is performed by pneumatic cylinder (16).

Implementation of the impregnating fibers through the mechanism, shall be performed by the operator and the operator does manually, and then the whole process of cut and restart the fibers on the surface of the wound part (17) for each successive winding is done automatically.

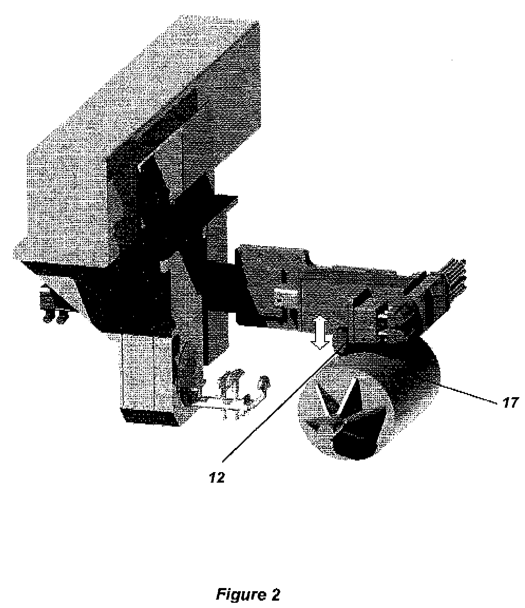

Below mentioned explanation describes the operating principle of this mechanism in a winding section (17) with fiber impregnated with resin. Figure 2 should give an understanding of the mechanism when it is mounted on a suitable machine and it is in working position and by using a knife (12) automatically cutting the fibers that are the essence of the described invention.

As previously stated, the first implementation of impregnated fibers through the mechanism shall be performed by the operator and it is performed manually. Pneumatical cylinder (5) moving down components set on the guides (4), so press the fibers down causing them to central axis of the part (17) which should be wound. Furthermore, follow extraction of fiber hold bed and fiber cut bed under the fibers which is done by the cylinder (9) and (10). Fiber holder (11) press the fibers on the fiber hold bed (6), while the knife (12) moves down and cut the fibers. The fibers remain caught between fiber holder (11) and fiber cut bed (7). Now, all components mounted on guides (4) together with the caught ends of the fibers are moved up by the cylinder (5), and rotated for 90° in counter clockwise rotation with the rotational cylinder (2). After that follow simultaneous double moving ahead to the axis of the section (17) which has to be wound. In the first step the whole mechanism is moved with the carriage on which is mounted, and then the components mounted on the guides (4) are moved by the cylinder (5) which is in horizontal position and together moving forward. Thus, caught fibers are carried over the part (17) which should be wound, passes its symmetry axis, while pressure roller (15) is positioned over the center axis of the section. Pressure roller (15) with the cylinder (16), press the fibers on the surface of section (17) while fiber holder (11) move up. The fibers are delivered (free) from the mechanism and stay between pressure roller (15) and surface of the wounded part (17). Follow winding process which includes clockwise rotation of the part in order ends of impregnated fibers drop on wounded part to come under pressure roller, and then is performed rotation of the part, but in opposite direction. After that and when the impregnated fibers overlapping, the pressure roller (15) going up and the whole mechanism goes into the starting position. During the winding process, the pressure roller along with the carriage is withdrawn on the side. When the winding process is finished, the whole process is starting from the beginning.

## Claims

1. Mechanism for automatically cutting and placement of resin impregnated fibers **wherein** it is provided at least one carrier (1) that serves mechanism to be set to the carriage which can move longitudinally and transversely relative to the axis of the wound part and where is provided more pneumatic cylinders one of which is rotational (2) and allows rotation of the components mounted on guide (4) and the said components and also the pneumatic cylinder (5) are rotated with the rotational cylinder (2), the cylinder (9) allows linear motion of the fiber hold bed (6) to pull it out and cylinder (10) allowing linear motion of the fiber cut bed, cylinder (13) allows opening and closing of fiber holder, cylinder (14) allows opening and closing of the knife, cylinder (16) allows movement of pressure roller (15).

2. Mechanism for automatically cutting and placement of resin impregnated fibers in accordance to patent claim 1 wherein the pneumatic cylinder (5) provide move down of the components which are mounted on guide (4) and simultaneously pressing the fibers positioned in the central axis of the part that should be wound.

3. The mechanism in accordance to patent claim 2 wherein extraction of fiber hold bed and fiber cut bed under the fibers is done by the cylinder (9) and (10) while fiber holder (11) press the fibers on the fiber hold bed (6), the knife (12) move down and cut the fibers.

4. The mechanism in accordance to patent claims 2 and 3 **wherein** the components are mounted on guides (4) together with the caught ends of the fibers are moved up by the cylinder (5), and rotated for 90° in center clockwise rotation with the rotational cylinder (2).

5. The mechanism in accordance to the patent claim 1 and 4 **characterized that** includes moving of the whole mechanism with the carriage on which is mounted, and then the components mounted on the guides (4) are moved by the cylinder (5) which is in horizontal position and moving forward, thus, caught fibers are carried over the part which should be wound, passes his symmetry axis, while pressure roller (15) is positioned over the center axis of the part.

6. The mechanism in accordance to patent claims 1 and 5 **characterized** that pressure roller (15) with the cylinder (16), press the fibers on the surface of part, while fiber holder (11) moves up.

7. The mechanism in accordance to patent claims 1 and 4 are **characterized** with winding process that includes clockwise rotation of the part (17) in order ends of impregnated fibers drop on wounded part to come under pressure roller, and then is performed rotation of the part, but in opposite direction and after one performed rotation and when the impregnated fibers overlapping, the pressure roller (15) going up and the whole mechanism goes into the starting position.

## Patentansprüche

1. Mechanismus zum automatischen Schneiden und Platzierung von mit Harz imprägnierten Fasern wobei vorgesehen ist, wenigstens einen Träger (1), zu dem genannten Mechanismus auf einem Wagen gelagert ist, der längs und quer zur Achse des Teils beweglich ist und wobei sofern mehrere pneumatische Zylinder vorgesehen sind, von denen einer drehbar ist(2) und ermöglicht die Drehung aller Komponenten, die an der Führungen befestigt sind (4), und diese Komponenten und die pneumatischen Zylinder (5)drehen sich mit dem Drehzylinder (2), wobei der Zylinder (9) ermöglicht eine lineare Bewegung oder Implikation der Matrize des Drückers(6) und dessen Herausziehen, wobei der Zylinder (10) eine lineare Bewegung der Matrize ermöglicht, Zylinder (13) dient zum Öffnen und Schließen des Drückers, der Zylinder (14) dient zum Öffnen und Schließen des Messers, der Zylinder (16) ermöglicht eine Bewegung der Druckwalze (15).

2. Mechanismus zum automatischen Schneiden und Platzierung von mit Harz imprägnierten Fasern, wobei der pneumatische Zylinder (5) bewegt nach unten alle Komponenten, die der Führung (4) angebracht sind, und das gleichzeitige Drücken der Fasern zu der Mittelachse des Teils, der aufgewickelt werden soll.

3. Mechanismus nach Patentanspruch 2, wobei das Ziehen der Matrix des Drückers und der Matrix des Messers unter den Fasern mit Hilfe von Zylindern (9) und (10) durchgeführt wird , während der Drücker (11), ergreift und presst die Faser auf die Matrize des Drückers (6), das Messer(12) bewegt sich nach unten und führt das Schneiden der Fasern.

4. Mechanismus nach den Patentansprüchen 2 und 3, wobei die Komponenten, die auf der Führung (4) angebracht sind,zusammen mit den Enden der Fasern,heben sich mit der Hilfe vom Zylinder (5), und rotiert um 90° in die umgekehrte Richtung gegen den Uhrzeigersinn mit der Hilfe eines Drehzylinders (2).

5. Der Mechanismus nach den Patentansprüchen 1 und 4, **dadurch gekennzeichnet, dass** danach eine Bewegung des gesamten Mechanismus zusammen mit dem Wagen, auf dem es gestellt ist, einbezieht, auch die Komponenten an der Führung (4) bewegen sich mit dem Zylinder(6), der sich in einer horizontalen Position befindet und bewegt sich nach vorne. Die gefangenen Fasern sind über den Teil geführt, der aufgewickelt werden soll, und durchläuft seine Symmetrieachse, während die Druckwalze (15) über die Mittelachse des Teiles positioniert ist.

6. Der Mechanismus gemäß der Patentanmeldung 1 und 5, **dadurch gekennzeichnet, dass** die Druckrolle (15) mit der Hilfe des Zylinders (16) befindet, die Fasern auf der Oberfläche des Teils, während der Faserhalter (11) bewegt sich nach oben.

7. Der Mechanismus gemäß Patentansprüchen 1 und 4, **dadurch gekennzeichnet, dass** Wickelverfahren, des Abschnittes im Uhrzeigersinn Drehrichtung umfasst (17), um Enden der imprägnierten Fasern, die auf dem gewickelten Teil gefallen sind, unter Druck der Walze zu kommen, und dann wird die Drehung des Abschnittes durchgeführt, aber in entgegengesetzter Richtung und nach einer Drehung durchgeführt wird, und wenn die imprägnierten Fasern überschneiden wrden, die Druckrolle (15) geht nach oben und der gesamte Mechanismus geht in die Ausgangsposition.

## Revendications

1. Mécanisme de coupe automatique et de mise des fibres imprégnées de résine où on est prévu au moins un support (1) pour que le mécanisme susmentionné soit posé sur un chariot qui se déplace longitudinalement et transversalement par rapport à l'axe de la pièce qui doit être enroulée et où se trouvent plusieurs cylindres pneumatique dont un est rotatif (2) permettant la rotation de tous les composants fixés sur les guides (4), ces composant ainsi que le cylindre pneumatique (5) pivotent avec le cylindre rotatif (2), le cylindre (9) permet le mouvement linéaire ou l'implication de la matrice du poussoir (6) et sa retraite au dehors, et le cylindre (10) permet le mouvement linéaire de la matrice du couteau, le cylindre (13) sert à ouvrir et fermer le poussoir, le cylindre (14) sert à ouvrir et fermer le couteau, le cylindre (16) permet le mouvement du rouleau à pousser (15).

2. Le mécanisme de coupe automatique et de mise de fibres imprégnées de résine où le cylindre pneumatique (5) fait mouvoir en bas les composants montés sur les guides (4) en poussant simultanément les fibres positionnées sur l'axe central de la pièce qui doit être enroulée.

3. Le mécanisme qui concerne la revendication de brevet 2 où la retraite de la matrice du poussoir et de la matrice du couteau du dessous des fibres s'effectue à l'aide des cylindres (9) et (10) tandis que le poussoir (11) serre/pousse les fibres sur la matrice du poussoir (6), le couteau (12) se déplace en bas et coupe les fibres.

4. Le mécanisme qui concerne les revendications de brevet 2 et 3 où, les composant montés sur les guides (4) ainsi que les extrémités des fibres capturés sont déplacés en haut par le cylindre (5), et pivotent de 90° dans le sens opposé des aiguilles de l'horloge à l'aide du cylindre de rotation (2).

5. Le mécanisme qui concerne les revendications de brevet 1 et 4 **est caractérisé par le fait qu**'à la suite elle initie le mouvement de tout le mécanisme y compris le chariot sur lequel il est monté, puis les composants mis sur les guides (4) sont poussés par le cylindre (5) qui se trouve en position horizontale et se déplace en avant en faisant que les fibres capturées soient conduites au dessus de la pièce qui doit être enroulée en passant par son axe de symétrie, tandis que le rouleau à pousse (15) se positionne au dessus de l'axe centrale de la pièce.

6. Le mécanisme qui concerne les revendications de brevet de 1 et 5 **est caractérisé par le fait** le fait que le rouleau de pression (15), à l'aide du cylindre (16), presse les fibres contre la surface de la pièce pendant que le pressoir (11) se déplace en haut.

7. Le mécanisme qui concerne les revendications de brevet de 1 et 4 **est caractérisé par** un procédé d'enroulement qui comprend une rotation dans le sens des aiguilles de l'horloge de la pièce (17) pour que les bouts des fibres imprégnées, qui viennent de tomber sur la pièce enroulée, se placent sous le rouleau de pression, après quoi, on effectue une rotation de la pièce mais, cette fois-ci, dans le sans opposé de sorte que, après une rotation effectuée et le chevauchement des fibres imprégnées, le rouleau de pression (15) se lève et tout le mécanisme est amené à la position de départ.
